# FASCICULE DE BREVET EUROPEEN

(11) **EP 1 631 750 B1**
(45) Date de publication et mention de la délivrance du brevet: **02.07.2008**
(21) Numéro de dépôt: 04742885.9
(22) Date de dépôt: 08.06.2004
(51) Int. Cl.: F16D 23/14

(54) **BUTEE DE COMMANDE A ENSEMBLE VIS/ECROU**
MIT EINER SCHRAUBEN-/MUTTERANORDNUNG VERSEHENER BETÄTIGUNGSHEBEL
OPERATING LEVER PROVIDED WITH A SCREW/NUT ASSEMBLY

(30) Priorité: 10.06.2003 FR 0306960
(43) Date de publication de la demande: 08.03.2006
(73) Titulaire: Valeo Embrayages, 80009 Amiens (FR)
(72) Inventeur: LEBAS, Gilles, 80800 Villers Bretonneux (FR); DELEVALLEE, Jean-Louis, F-80000 Amiens (FR)
(74) Mandataire: Vignesoult, Serge L. M.
(86) Numéro de dépôt international: PCT/FR2004/050219
(87) Numéro de publication internationale: WO 2004/111480

(56) Documents cités:
- FR-A- 1 335 440
- US-A- 4 863 005
- US-A- 5 653 323
- US-A1- 2002 060 115
- US-A1- 2003 075 412

## Description

La présente invention concerne une butée de commande à ensemble vis/écrou, notamment pour dispositif de commande d'embrayage de véhicule automobile.

On connaît déjà dans l'état de la technique, notamment d'après US 2003/0075412, une butée de commande à ensemble vis/écrou, comprenant un premier organe fixe coopérant par vissage avec un second organe mobile portant un organe d'appui destiné à coopérer avec un diaphragme.

L'invention a pour but d'améliorer ce type de butée de commande, en apportant un effort d'assistance au déplacement de l'organe d'appui.

A cet effet, l'invention a pour objet une butée de commande pour embrayage de véhicule automobile comportant un ensemble vis/écrou comprenant un premier organe fixe coopérant par vissage avec un second organe mobile, destiné à être déplacé par des moyens d'entraînement en rotation, ce second organe mobile portant un organe d'appui destiné à coopérer avec un diaphragme, où le second organe mobile comporte deux parties, dites respectivement d'assistance et de support, ces parties étant mobiles l'une par rapport à l'autre sensiblement parallèlement à la direction de vissage des premier et second organes, la butée de commande comprenant des moyens d'assistance au déplacement de l'organe d'appui entre des positions de repos et de débrayage du diaphragme, ces moyens d'assistance étant destinés à relier cinématiquement en rotation la partie d'assistance de l'organe mobile à un organe d'entraînement lié en rotation au diaphragme ou formé par ce diaphragme.

Ainsi, le diaphragme est susceptible de fournir un effort d'assistance à l'organe d'appui en reliant cinématiquement, grâce aux moyens d'assistance, le diaphragme à la partie d'assistance de l'organe mobile de l'ensemble vis/écrou.

De préférence, l'organe d'appui comporte un roulement muni de deux bagues respectivement rotative et fixe en rotation. La bague rotative est destinée à coopérer avec le diaphragme et la bague fixe est portée par la partie de support de l'organe mobile. La partie d'assistance de l'organe mobile est alors destinée à coopérer avec la bague rotative du roulement par l'intermédiaire de moyens de frottement complémentaires coopérant entre eux sous l'effet d'une force de serrage.

Avantageusement, la force de serrage est fonction du couple fourni par les moyens d'entraînement de l'organe mobile.

De préférence également, des moyens de couplage libérables lorsque le diaphragme est à l'arrêt sont intercalés cinématiquement entre la partie d'assistance de l'organe mobile et la bague rotative.

Les moyens de couplage libérables comprennent par exemple des moyens formant roue libre intercalés cinématiquement entre la partie d'assistance de l'organe mobile et les moyens de frottement.

En variante, les moyens de couplage libérables peuvent comprendre un embrayage centrifuge intercalé cinématiquement par exemple entre la bague rotative du roulement et les moyens de frottement.

Suivant d'autres caractéristiques optionnelles de différents modes de réalisation de cette butée de commande :
- la butée de commande comporte des moyens d'amplification de la force de serrage des moyens de frottement ;
- les moyens d'amplification de l'effort de serrage des moyens de frottement comportent un levier interposé entre les moyens de frottement et la partie d'assistance de l'organe mobile ;
- le levier interposé entre les moyens de frottement et la partie d'assistance de l'organe mobile est un levier du second genre ;
- le levier est constitué d'une rondelle munie d'un bord interne, formant bord d'appui, emboîté dans une gorge annulaire complémentaire ménagée sur la partie de support de l'organe mobile, d'un bord externe d'application d'effort de serrage, coopérant avec la partie d'assistance de l'organe mobile, et d'une zone intermédiaire d'appui sur les moyens de frottement située entre les bords interne et externe ;
- les moyens de frottement comportent des moyens de pincement d'un élément annulaire solidaire de la bague rotative, dit élément pincé, portés par la partie de support de l'organe mobile de façon à être solidaire en rotation de cette partie ;
- les moyens de pincement comportent une mâchoire mobile montée coulissante sur une mâchoire fixe, des éléments de frottement étant
- intercalés entre, d'une part, l'élément pincé et la mâchoire fixe, et d'autre part, l'élément pincé et la mâchoire mobile ;
- le levier est constitué d'une rondelle munie d'un bord interne en appui sur une butée solidaire de la mâchoire fixe, d'un bord externe en appui sur la partie d'assistance de l'organe mobile, et d'une zone intermédiaire située entre le bord interne et le bord externe en appui sur la mâchoire mobile ;
- les moyens d'assistance comportent des moyens de déplacement de la partie d'assistance de l'organe mobile par rapport à sa partie de support fournissant la force de serrage ;
- les moyens de déplacement comprennent des surfaces d'engrènement complémentaires, dites entraînante et entraînée, orientées de façon à engendrer une composante d'entraînement de la partie d'assistance parallèle à la direction de vissage ;
- la surface d'engrènement entraînante est ménagée sur les moyens d'entraînement et la surface d'engrènement entraînée est ménagée sur la partie d'assistance ;
- les moyens d'entraînement comprennent une vis sans fin ;
- la surface d'engrènement entraînante est délimitée par un filetage de la vis sans fin et la surface d'engrènement entraînée est délimitée par une denture périphérique complémentaire ménagée sur la partie d'assistance ;
- le filetage entraînant et la denture entraînée sont orientés de façon à interdire toute rotation libre de l'organe mobile dans un sens contraire à un sens de débrayage ;
- la surface d'engrènement entraînante est ménagée sur la partie d'assistance et la surface d'engrènement entraînée est ménagée sur la partie de support ;
- les moyens d'entraînement sont entraînés en rotation par un moyen électrique ou hydraulique ;
- l'organe fixe forme la vis de l'ensemble vis/écrou et l'organe mobile forme l'écrou de l'ensemble vis/écrou ;
- l'organe fixe et l'organe mobile sont munis de filetages complémentaires orientés de façon à interdire toute rotation libre de l'organe mobile dans un sens contraire à un sens de débrayage.

L'invention sera mieux comprise à la lecture de la description qui va suivre, donnée uniquement à titre d'exemple, et faite en se référant aux dessins annexés dans lesquels :
- les figures 1 et 2 sont des vues en coupe axiale d'une butée de commande selon un premier mode de réalisation de l'invention, la figure 1 étant schématique ;
- la figure 3 est une vue éclatée de la butée de commande vue sur les figures 1 et 2 ;
- les figures 4 et 5 sont des vues en coupe axiale d'une butée de commande selon un deuxième mode de réalisation de l'invention, la figure 4 étant schématique ;
- la figure 6 est une vue éclatée de la butée de commande vue sur les figures 4 et 5 ;
- les figures 7 et 8 sont des vues en coupe axiale d'une butée de commande selon un troisième mode de réalisation de l'invention, la figure 7 étant schématique ;
- la figure 9 est une vue éclatée de la butée de commande vue sur les figures 7 et 8.

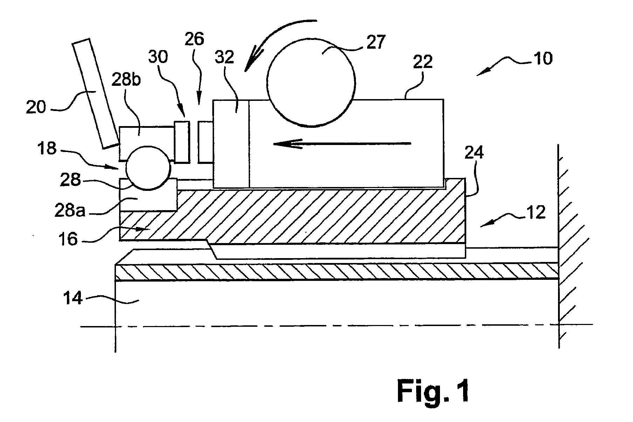

On a représenté sur les figures 1 à 3 une butée de commande selon un premier mode de réalisation de l'invention, désignée par la référence générale 10, destinée à équiper un dispositif d'embrayage d'un véhicule automobile.

Cette butée de commande 10 comporte un ensemble vis/écrou 12, comprenant un premier organe fixe 14 coopérant par vissage avec un second organe mobile 16 portant un organe d'appui 18 destiné à coopérer avec un diaphragme 20 de type classique. L'organe d'appui 18 est destiné à pousser le diaphragme 20 lorsqu'un débrayage est commandé. Le diaphragme 20 est déplaçable entre une position de repos (position d'embrayage vers laquelle il est rappelé élastiquement) et une position de débrayage.

Dans l'exemple décrit, l'organe fixe 14 forme la vis 14 de l'ensemble vis/écrou et l'organe mobile 16 forme l'écrou 16 de l'ensemble vis/écrou.

L'organe fixe 14 et l'organe mobile 16 sont munis de filetages complémentaires coopérant entre eux directement ou par l'intermédiaire de billes de réduction de frottements.

L'organe mobile 16 comporte deux parties coaxiales mobiles l'une par rapport à l'autre, dites respectivement partie d'assistance 22 et partie de support 24. Ces parties 22,24 sont destinées à se déplacer l'une par rapport à l'autre sensiblement parallèlement à la direction de vissage des premier et second organes 14 et 16. A cet effet, la surface interne de la partie d'assistance 22 et la surface externe de la partie de support 24 sont munies de nervures et rainures axiales complémentaires.

La surface interne de la partie de support 24 est muni du filetage coopérant avec le filetage complémentaire de l'organe fixe 14. De préférence, ces filetages complémentaires sont orientés de façon à interdire toute rotation libre de l'organe mobile 16 dans un sens contraire à un sens de débrayage, sous l'effet de la force élastique de rappel du diaphragme 20. Ainsi, la position débrayée (totalement ou partiellement) du diaphragme 20 peut être maintenue lorsque le moyen (électrique ou hydraulique) d'entraînement de la vis sans fin 27 est désactivé.

La partie d'assistance 22 de l'organe mobile 10 est susceptible d'être reliée cinématiquement au diaphragme 20 par des moyens 26 d'assistance au déplacement de l'organe d'appui 18. En variante, la partie d'assistance 22 de l'organe mobile 10 peut être reliée cinématiquement à un organe d'entraînement lié en rotation au diaphragme 20.

L'organe mobile 16 est entraîné en rotation par des moyens d'entraînement comprenant par exemple une vis sans fin 27 coopérant avec une denture périphérique complémentaire (non représentée) de la partie d'assistance 22 de l'organe mobile 16.

La vis sans fin 27 est entraînée en rotation de façon connue en soi par un moyen électrique (moteur) ou hydraulique (non représenté).

En variante, les moyens d'entraînement de l'organe mobile 16 pourraient être de divers types et comprendre notamment des engrenages d'orientations variées et/ou des moyens hydrauliques.

De préférence, les moyens d'assistance 26 comportent des moyens de déplacement de la partie d'assistance 22 par rapport à la partie de support 24 qui seront décrits ci dessous.

Ces moyens de déplacement comportent des surfaces d'engrènement complémentaires, dites entraînante et entraînée, orientées de façon à ce que, lorsqu'elles coopèrent entre elles sous l'effet d'un couple fourni par les moyens d'entraînement 27, ces surfaces d'engrènement engendrent une composante d'entraînement de la partie d'assistance 22 parallèle à la direction de vissage.

Dans l'exemple représenté, la surface d'engrènement entraînante est ménagée sur les moyens d'entraînement 27 et la surface d'engrènement entraînée est ménagée sur la partie d'assistance 22. Plus particulièrement, la surface d'engrènement entraînante est délimitée par un filetage de la vis sans fin 27 et la surface d'engrènement entraînée est délimitée par une denture périphérique complémentaire ménagée sur la partie d'assistance 22.

Le cas échéant, le filetage d'entraînant (ménagé sur la vis sans fin 27) et la denture entraînée (ménagée sur la partie d'assistance 22) sont orientés de façon à interdire toute rotation libre de l'organe mobile 16 dans un sens contraire à un sens de débrayage. Ainsi, la position débrayée (totalement ou partiellement) du diaphragme 20 peut être maintenue lorsque le moyen (électrique ou hydraulique) d'entraînement de la vis sans fin 27 est désactivé.

Suivant une variante non illustrée, la surface d'engrènement entraînante pourrait être ménagée sur la partie d'assistance 22, la surface d'engrènement entraînée étant, dans ce cas, ménagée sur la partie de support 24. Ainsi, la surface interne de la partie d'assistance 22 et la surface externe de la partie de support 24 pourraient être munies de dentures inclinées complémentaires.

L'organe d'appui 18 comporte un roulement 28 muni de deux bagues appelées respectivement bague fixe en rotation 28a et bague rotative 28b.

La bague fixe 28a (interne radialement) est portée par la partie de support 24 de l'organe mobile 16.

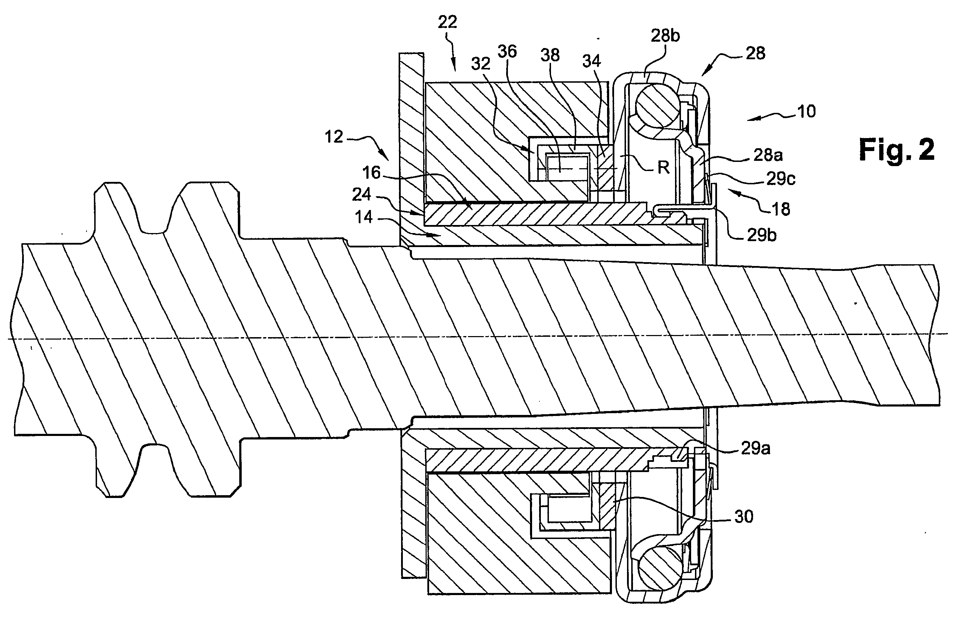

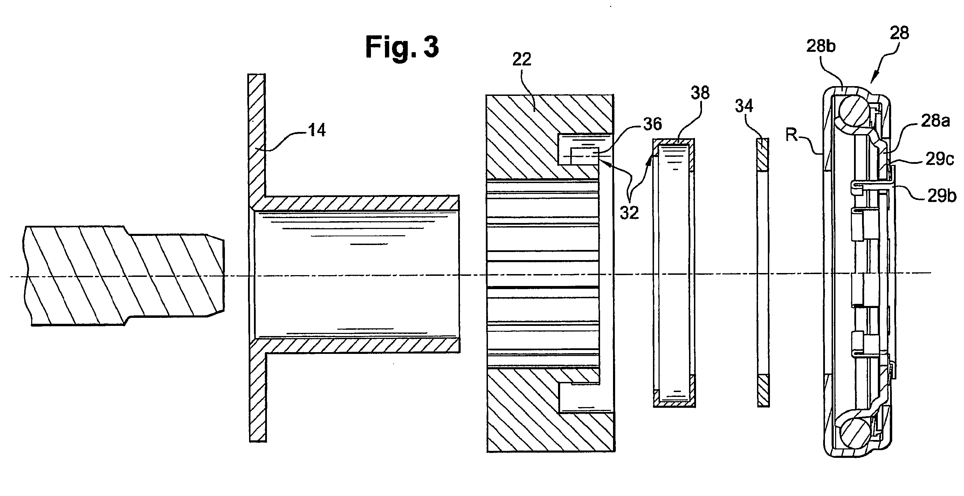

Les figures 2 et 3 représentent un exemple de réalisation de moyens 29 de fixation de la bague fixe 28a sur la partie de support 24 (non représentée sur la figure 3). Ces moyens 29 de fixation comportent un épaulement 29a d'appui axial de la bague fixe 28a, ménagé sur la partie de support 24. Les moyens 29 de fixation comportent aussi une bague 29b de retenue de la bague fixe 28a sur l'épaulement 29a, encliquetée sur la partie de support 24. Les moyens 29 de fixation comportent enfin une rondelle 29c à effet élastique axial intercalée entre la bague de retenue 29b et la bague fixe 28a.

La bague rotative 28b (externe radialement) est destinée à coopérer, d'une part, avec le diaphragme 20, et d'autre part, avec la partie d'assistance 22 par l'intermédiaire de moyens de frottement 30 complémentaires comportant au moins deux surfaces de friction complémentaires.

Les moyens de frottement complémentaires 30 sont destinés à être serrés par une force de serrage qui est fonction du couple fourni par les moyens d'entraînement de l'organe mobile 16, à savoir la vis sans fin 27 dans l'exemple décrit.

Les moyens de déplacement de la partie d'assistance 22 par rapport à la partie de support 24 -comprenant dans l'exemple décrit les surfaces d'engrènement complémentaires orientés de façon à engendrer une composante d'entraînement de la partie d'assistance 22 parallèle à la direction de vissage- fournissent la force de serrage des moyens de frottement 30.

Une roue libre 32 est intercalée cinématiquement entre la partie d'assistance 22 de l'organe mobile 16 et les moyens de frottement 30.

Les figures 2 et 3 représentent un exemple de réalisation des moyens de frottement 30 et de la roue libre 32. Ces moyens de frottement 30 comportent une rondelle de frottement 34 intercalée entre un prolongement radial R de la bague rotative 28b et la roue libre 32.

La roue libre 32 comprend des galets de coincement 36 logés entre une partie formant moyeu de la partie d'assistance 22 et une cage 38 de la roue libre 32.

On notera que la rondelle de frottement 34 est intercalée entre le prolongement radial R et la cage 38, les faces de friction étant formées, d'une part, sur la rondelle de frottement, et d'autre part, sur le prolongement radial R et/ou la cage 38.

Lorsqu'une commande de débrayage est activée, la partie d'assistance 22 de l'organe mobile 16 se translate sous l'effet de la coopération des surfaces d'engrènement complémentaires ménagées sur la vis sans fin 27 et les dentures de la partie d'assistance 22, dans une direction sensiblement parallèle à la direction de vissage, de manière à appliquer un effort de serrage sur les moyens de frottement 30. Lorsque le diaphragme 20, entraîné par un couple moteur du véhicule automobile, est en rotation, il entraîne en rotation la bague rotative 28b coopérant avec ce diaphragme 20. Puis, le couple ainsi appliqué à la bague rotative 28b est partiellement transmis à la partie d'assistance 22 par l'intermédiaire des moyens de frottement 30.

Ce couple transmis vient s'ajouter au couple apporté par la vis sans fin 27, assistant ainsi celle ci dans la mise en rotation de l'organe mobile 16 par rapport à l'organe fixe 14.

On notera que, lorsque le diaphragme 20 n'est pas en rotation (moteur à l'arrêt), la roue libre 32 découple la partie d'assistance 22 d'avec les moyens de frottements 30 qui sont solidaires en rotation avec le diaphragme 20 à l'arrêt. La roue libre 32 permet donc d'éviter que le diaphragme 20 à l'arrêt ne freine la rotation de la partie d'assistance 22.

Dans le cas où le diaphragme 20 est en rotation, sa vitesse de rotation étant supérieure à celle de la partie d'assistance 22, la roue libre 32 couple la partie d'assistance 22 avec les moyens de frottement 30, et permet ainsi l'assistance au débrayage comme décrit précédemment.

On notera donc que la roue libre 32 forme des moyens de couplage libérables lorsque le diaphragme 20 est à l'arrêt intercalés cinématiquement entre la partie d'assistance 22 et la bague rotative 28b.

En variante, ces moyens de couplage libérables pourraient comprendre un embrayage centrifuge intercalé cinématiquement par exemple entre la bague rotative 28b du roulement et les moyens de frottement 30.

Lorsque le diaphragme 20 est arrêté, cet embrayage centrifuge découple la bague rotative 28b du roulement d'avec les moyens de frottement 30, ce qui évite le freinage de la rotation de la partie d'assistance 22.

Par contre, lorsque le diaphragme 20 tourne, l'embrayage centrifuge couple, sous l'effet de cette rotation, la bague rotative 28b du roulement avec les moyens de frottement 30 afin de transmettre un couple entre le diaphragme 20 et la partie d'assistance 22.

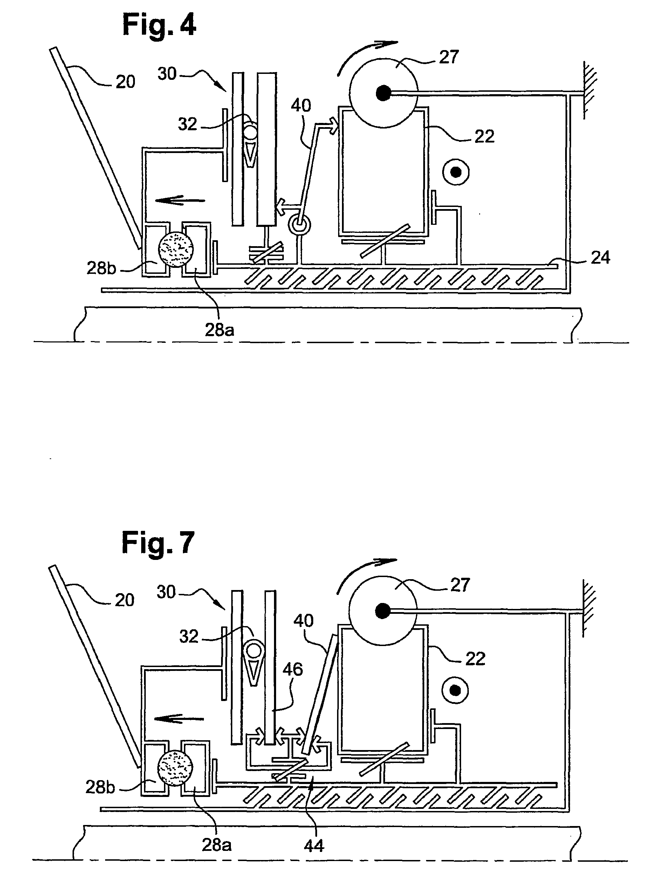

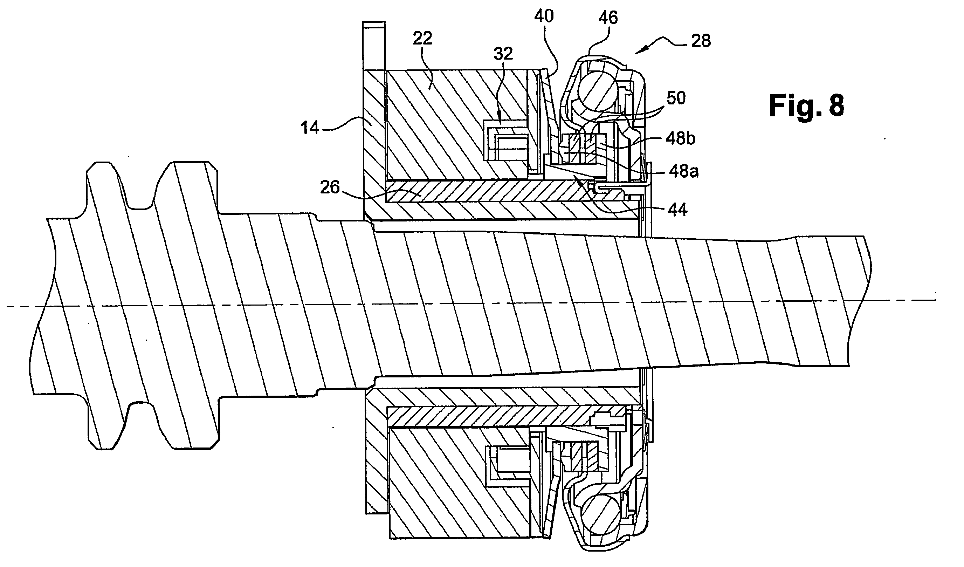

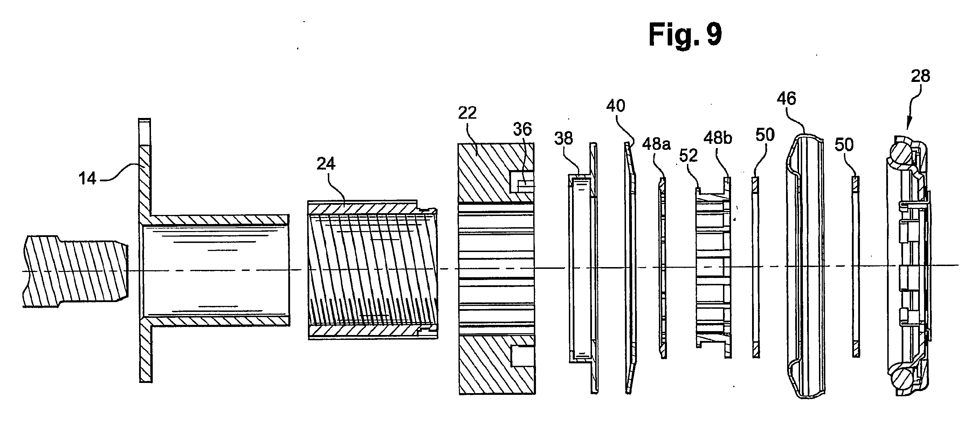

Sur les figures 4 à 9, on a représenté une butée de commande selon des deuxième et troisième modes de réalisation. Sur ces figures, les éléments analogues à ceux des figures 1 à 3 sont désignés par des références identiques.

Ces deuxième et troisième modes de réalisation différent du premier en ce qu'ils comprennent des moyens 39 d'amplification de la force de serrage des moyens de frottement.

Ces moyens 39 d'amplification comportent de préférence un levier 40 interposé entre les moyens de frottement 30 et la partie d'assistance 22 de l'organe mobile 16.

On rappellera qu'un levier est une machine simple dont on distingue généralement trois genres.

Un levier est dit du premier genre, ou intermobile, lorsque le point d'articulation de ce levier (point d'appui) est placé entre, d'une part, une partie de manoeuvre de ce levier, sur laquelle est appliquée une force de manoeuvre du levier (ou puissance), et, d'autre part, une partie active de ce levier sur laquelle est exercée une force de résistance.

Un levier est dit du deuxième genre, ou interrésistant, lorsque la partie active de ce levier est placée entre le point d'articulation et la partie de manoeuvre du levier.

Enfin, un levier est dit du troisième genre, ou interpuissant, lorsque la partie de manoeuvre de ce levier est placée entre le point d'articulation et la partie active de ce levier.

Dans les exemples décrits, le levier d'amplification 40 est un levier du second genre.

Dans le deuxième mode de réalisation représenté sur les figures 4 à 6, le levier 40 est constitué d'une rondelle ayant une forme générale conique. Cette rondelle d'amplification 40 est munie d'un bord interne 401, formant bord d'appui, emboîté dans une gorge annulaire complémentaire 42 ménagée sur la partie de support 24, d'un bord externe 40E (partie de manoeuvre) d'application d'effort de serrage, coopérant avec la partie d'assistance 22 de l'organe mobile 16, ainsi que d'une zone intermédiaire 40T (partie active) d'appui sur les moyens de frottement 30 située entre les bords interne et externe.

Conformément au principe de fonctionnement du levier du second genre, l'effort appliqué sur les moyens de frottement 30 par la zone intermédiaire 40T est supérieur à l'effort appliqué par la partie d'assistance 22 de l'organe mobile 16. Cette amplification de l'effort de serrage permet un meilleur entraînement en rotation par le diaphragme 20 de l'organe mobile 16, et donc une meilleure assistance au débrayage.

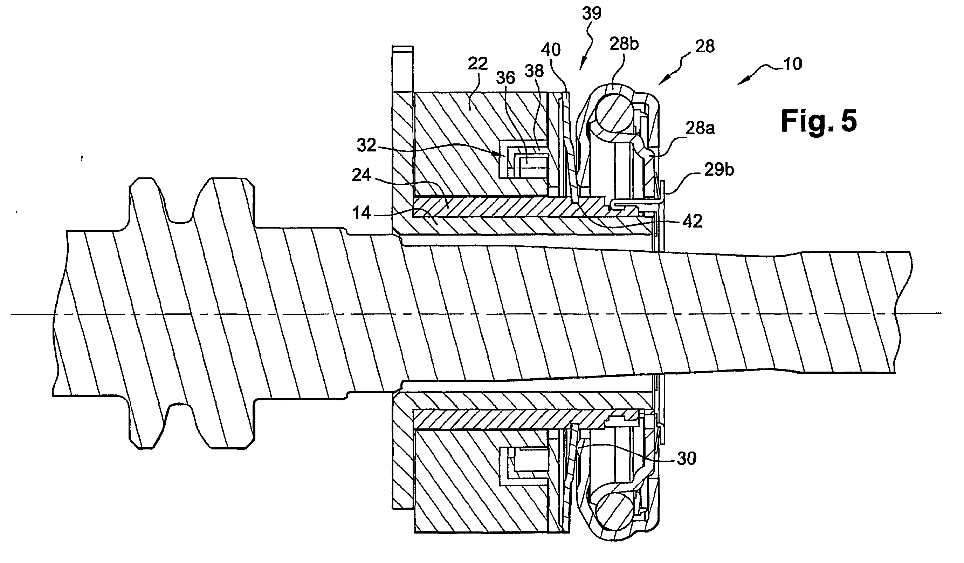

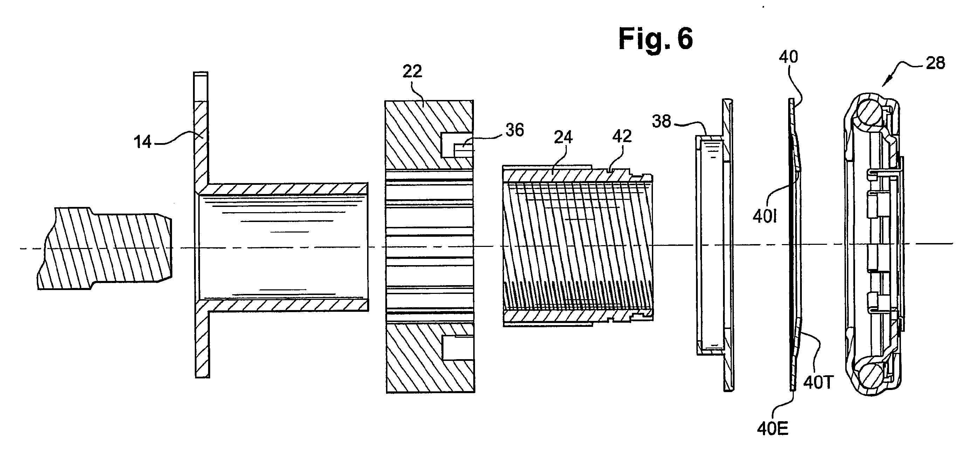

On notera que dans le mode de réalisation représenté sur les figures 5 et 6, les moyens de frottement 30 comprennent deux surfaces de friction délimitant la rondelle d'amplification 40 et le prolongement radial R de la bague rotative 28b. Mais il est tout à fait possible d'intercaler une rondelle de frottement supplémentaire entre la rondelle d'amplification 40 et le prolongement radial R de la bague rotative 28b.

Dans le troisième mode de réalisation représenté sur les figures 7 à 9, les moyens de frottement 30 comportent des moyens de pincement 44 d'un élément annulaire 46 solidaire en rotation de la bague rotative 28b. Ces moyens de pincement 44 sont portés par la partie de support 24 de l'organe mobile 16 de façon à être solidaires en rotation de cette partie 24.

Les moyens de pincement 44 comportent une mâchoire mobile 48a, montée coulissante sur une mâchoire fixe 48b. Des éléments annulaires de frottement 50 sont intercalés entre, d'une part, l'élément pincé 46 et la mâchoire fixe 48b, et d'autre part, l'élément pincé 46 et la mâchoire mobile 48a

La surface interne de la mâchoire fixe 48b et la surface externe de la partie de support 24 sont munies de nervures et rainures axiales complémentaires. Il en est de même de la surface interne de la mâchoire mobile 48a et de la surface externe de la mâchoire fixe 48b. Les nervures et rainures complémentaires solidarisent en rotation entre eux les éléments sur lesquels elles sont ménagées tout en autorisant des mouvements relatifs axiaux de ces éléments.

Le levier d'amplification 40 est intercalé entre la partie d'assistance 22 de l'organe mobile et les moyens de pincement 44.

Dans ce cas, le bord interne 401 de la rondelle d'amplification 40 est en appui sur une butée solidaire de la mâchoire fixe 48b, le bord externe 40E de la rondelle d'amplification 40 est en appui sur la partie d'assistance 22 de l'organe mobile 16, et la zone intermédiaire 40T de la rondelle d'amplification 40 est en appui sur la mâchoire mobile 48a.

La rondelle d'amplification 40 amplifie l'effort apporté par la partie d'assistance 22, et les moyens de pincement 44 transforment cet effort amplifié en un effort de pincement. On optimise ainsi la solidarisation en rotation de l'organe mobile 16 avec le diaphragme 20, et donc l'assistance au débrayage.

## Revendications

1. Butée de commande (10) pour embrayage de véhicule automobile comportant un ensemble vis/écrou (12) comprenant un premier organe fixe (14) coopérant par vissage avec un second organe mobile (16), destiné à être déplacé par des moyens d'entraînement en rotation (27), ce second organe mobile (16) portant un organe d'appui (18) destiné à coopérer avec un diaphragme (20), où le second organe mobile (16) comporte deux parties, dites respectivement d'assistance (22) et de support (24), ces parties étant mobiles l'une par rapport à l'autre sensiblement parallèlement à la direction de vissage des premier et second organes, la butée de commande (10) comprenant des moyens (26) d'assistance au déplacement de l'organe d'appui (18) entre des positions de repos et de débrayage du diaphragme, **caractérisée en ce que** ces moyens d'assistance (26) sont destinés à relier cinématiquement en rotation la partie d'assistance (22) de l'organe mobile (16) à un organe d'entraînement lié en rotation au diaphragme (20) ou formé par ce diaphragme (20).

2. Butée de commande selon la revendication 1, **caractérisée en ce que** l'organe d'appui (18) comporte un roulement (28) muni de deux bagues respectivement rotative (28b) et fixe en rotation (28a), la bague rotative (28b) étant destinée à coopérer avec le diaphragme (20) et la bague fixe (28a) étant portée par la partie de support (24) de l'organe mobile (16), la partie d'assistance (22) de l'organe mobile (16) étant destinée à coopérer avec la bague rotative (28b) du roulement par l'intermédiaire de moyens de frottement complémentaires (30) coopérant entre eux sous l'effet d'une force de serrage.

3. Butée de commande selon la revendication 2, **caractérisée en ce que** la force de serrage est fonction du couple fourni par les moyens d'entraînement (27) de l'organe mobile (16).

4. Butée de commande selon la revendication 2 ou 3, **caractérisée en ce que** des moyens (32) de couplage libérables lorsque le diaphragme (20) est à l'arrêt sont intercalés cinématiquement entre la partie d'assistance (22) de l'organe mobile (16) et la bague rotative (28b).

5. Butée de commande selon la revendication 4, **caractérisée en ce que** les moyens de couplage libérables comprennent des moyens (32) formant roue libre intercalés cinématiquement entre la partie d'assistance (22) de l'organe mobile (16) et les moyens de frottement (30).

6. Butée de commande selon la revendication 4, **caractérisée en ce que** les moyens de couplage libérables (32) comprennent un embrayage centrifuge intercalé cinématiquement par exemple entre la bague rotative (28b) du roulement et les moyens de frottement (30).

7. Butée de commande selon la revendication 3 à 6, **caractérisée en ce qu'**elle comporte des moyens (39) d'amplification de la force de serrage des moyens de frottement (30).

8. Butée de commande selon la revendication 7, **caractérisée en ce que** les moyens (39) d'amplification de l'effort de serrage des moyens de frottement (30) comportent un levier (40) interposé entre les moyens de frottement (30) et la partie d'assistance (22) de l'organe mobile (16).

9. Butée de commande selon la revendication 8, **caractérisée en ce que** le levier (40) interposé entre les moyens de frottement (30) et la partie d'assistance (22) de l'organe mobile (16) est un levier du second genre.

10. Butée de commande selon la revendication 9, **caractérisée en ce que** le levier (40) est constitué d'une rondelle munie d'un bord interne, formant bord d'appui, emboîté dans une gorge annulaire (42) complémentaire ménagée sur la partie de support (24) de l'organe mobile (16), d'un bord externe d'application d'effort de serrage, coopérant avec la partie d'assistance (22) de l'organe mobile (16), et d'une zone intermédiaire d'appui sur les moyens de frottement (30) située entre les bords interne et externe.

11. Butée de commande selon l'une quelconque des revendications 2 à 10, **caractérisée en ce que** les moyens de frottement (30) comportent des moyens de pincement (44) d'un élément annulaire (46) solidaire de la bague rotative (28b), dit élément pincé, portés par la partie de support (22) de l'organe mobile (16) de façon à être solidaire en rotation de cette partie (22).

12. Butée de commande selon la revendication 11, **caractérisée en ce que** les moyens de pincement (44) comportent une mâchoire mobile (48a) montée coulissante sur une mâchoire fixe (48b), des éléments de frottement (50) étant intercalés entre, d'une part, l'élément pincé (46) et la mâchoire fixe (48b), et d'autre part, l'élément pincé (46) et la mâchoire mobile (48a).

13. Butée de commande selon les revendications 9 et 12 prises ensemble, **caractérisée en ce que** le levier (40b) est constitué d'une rondelle munie d'un bord interne en appui sur une butée solidaire de la mâchoire fixe (48a), d'un bord externe en appui sur la partie d'assistance (22) de l'organe mobile (16), et d'une zone intermédiaire située entre le bord interne et le bord externe en appui sur la mâchoire mobile (48a).

14. Butée de commande selon l'une quelconque des revendications précédentes prise en combinaison avec la revendication 3, **caractérisée en ce que** les moyens d'assistance (26) comportent des moyens de déplacement de la partie d'assistance (22) de l'organe mobile (16) par rapport à sa partie de support (24) fournissant la force de serrage.

15. Butée de commande selon la revendication 14, **caractérisée en ce que** les moyens de déplacement comprennent des surfaces d'engrènement complémentaires, dites entraînante et entraînée, orientées de façon à engendrer une composante d'entraînement de la partie d'assistance (22) parallèle à la direction de vissage.

16. Butée de commande selon la revendication 15, **caractérisée en ce que** la surface d'engrènement entraînante est ménagée sur les moyens d'entraînement (27) et la surface d'engrènement entraînée est ménagée sur la partie d'assistance (22).

17. Butée de commande selon l'une quelconque des revendications précédentes, **caractérisée en ce que** les moyens d'entraînement comprennent une vis sans fin (27).

18. Butée de commande selon les revendications 16 et 17 prises ensemble, **caractérisée en ce que** la surface d'engrènement entraînante est délimitée par un filetage de la vis sans fin (27) et la surface d'engrènement entraînée est délimitée par une denture périphérique complémentaire ménagée sur la partie d'assistance (22).

19. Butée de commande selon la revendication 18, **caractérisée en ce que** le filetage entraînant et la denture entraînée sont orientés de façon à interdire toute rotation libre de l'organe mobile (16) dans un sens contraire à un sens de débrayage.

20. Butée de commande selon la revendication 15, **caractérisée en ce que** la surface d'engrènement entraînante est ménagée sur la partie d'assistance (22) et la surface d'engrènement entraînée est ménagée sur la partie de support (24).

21. Butée de commande selon l'une quelconque des revendications précédentes, **caractérisée en ce que** les moyens d'entraînement (27) sont entraînés en rotation par un moyen électrique ou hydraulique.

22. Butée de commande selon l'une quelconque des revendications précédentes, **caractérisée en ce que** l'organe fixe (14) forme la vis de l'ensemble vis/écrou (12) et l'organe mobile (16) forme l'écrou de l'ensemble vis/écrou.

23. Butée de commande selon l'une quelconque des revendications précédentes, **caractérisée en ce que** l'organe fixe (14) et l'organe mobile (16) sont munis de filetages complémentaires orientés de façon à interdire toute rotation libre de l'organe mobile (16) dans un sens contraire à un sens de débrayage.

## Claims

1. Control stop (or bearing) (10) for a motor vehicle clutch, comprising a nut and leadscrew drive (12) that comprises a fixed first member (14) which cooperates in screw thread relationship with a movable second member (16) adapted to be displaced by rotary driving means (27), the said movable second member (16) carrying a thrust member (or body of support) (18) which is adapted to cooperate with a diaphragm (20), wherein the movable second member (16) comprises two parts, namely, respectively, an assistance part (22) and a support part (24), the said parts being movable with respect to each other substantially parallel to the screwing direction of the first and second members, the control stop (10) including means (26) for assisting the displacement of the thrust head (18) between positions of rest and disengagement of the diaphragm, **characterised in that** these assistance means (26) are adapted to couple the assistance part (22) of the movable member (16) kinematically in rotation to a drive member which is coupled in rotation with the diaphragm (20), or which consists of the said diaphragm (20).

2. Control stop according to Claim 1, **characterised in that** the thrust member (18) comprises a rolling bearing (28) having two bearing rings, namely a rotating ring (28b) and a non-rotating fixed ring (28a), the rotating ring (28b) being adapted to cooperate with the diaphragm (20) and the fixed ring (28a) being carried by the support part (24) of the movable member (16), the assistance part (22) of the movable member (16) being adapted to cooperate with the rotating ring (28b) of the rolling bearing through complementary friction means (30) cooperating with each other under the effect of a gripping force.

3. Control stop according to Claim 2, **characterised in that** the gripping force is a function of the torque exerted by the driving means (27) that drive the moving member (16).

4. Control stop according to Claim 2 or Claim 3, **characterised in that** coupling means (32), which are releasable when the diaphragm (20) is at rest, are interposed kinematically between the assistance part (22) of the movable member (16) and the rotating bearing ring (28b).

5. Control stop according to Claim 4, **characterised in that** the releasable coupling means comprise means (32) constituting a free wheel, which is interposed kinematically between the assistance part (22) of the movable member (16) and the friction means (30).

6. Control stop according to Claim 4, **characterised in that** the releasable coupling means (32) comprise a centrifugal clutch which is interposed kinematically for example between the rotating ring (28b) of the rolling bearing and the friction means (30).

7. Control stop according to Claims 3 to 6, **characterised in that** it includes means (39) for amplifying the gripping force exerted by the friction means (30).

8. Control stop according to Claim 7, **characterised in that** the means (39) for amplifying the gripping force of the friction means (30) comprise a lever (40) which is interposed between the friction means (30) and the assistance part (22) of the movable member (16).

9. Control stop according to Claim 8, **characterised in that** the lever (40) interposed between the friction means (30) and the assistance part (22) of the movable member (16) is a second order lever.

10. Control stop according to Claim 9, **characterised in that** the lever (40) consists of a washer having an inner edge constituting an abutment edge, inserted in a complementary annular groove (42) formed on the support part (24) of the movable member (16), an outer edge for application of gripping force, cooperating with the assistance part (22) of the movable member (16), and an intermediate zone for engagement on the friction means (30), situated between the inner and outer edges.

11. Control stop according to any one of Claims 2 to 10, **characterised in that** the friction means (30) comprise clamping means (44) for clamping an annular element (46) which is interdependent of the rotating bearing ring (28b) and which is referred to as the gripped element, the said clamping means being carried by the support part (22) of the movable member (16) so as to be rotatable with the said part (22).

12. Control stop according to Claim 11, **characterised in that** the clamping means (44) comprise a movable jaw (48a) which is mounted for sliding movement on a fixed jaw (48b), the friction means (50) being interposed between, firstly, the gripped element (46) and the fixed jaw (48b), and secondly the gripped element (46) and the movable jaw (48a).

13. Control stop according to Claims 9 and 12 taken together, **characterised in that** the lever (40b) consists of a washer having an inner edge which is in engagement on an abutment fixed with respect to the fixed jaw (48a), an outer edge in engagement on the assistance part (22) of the movable member (16), and an intermediate zone which is situated between the inner edge and the outer edge, and which is in engagement on the movable jaw (48a).

14. Control stop according to any one of the preceding Claims taken in combination with Claim 3, **characterised in that** the assistance means (26) comprise means for displacing the assistance part (22) of the movable member (16) with respect to its support part (24) supplying the gripping force.

15. Control stop according to Claim 14, **characterised in that** the displacement means comprise complementary meshing surfaces, referred to as the driving and driven surfaces, which are so oriented as to produce a driving component for driving the assistance part (22) parallel to the screwing direction.

16. Control stop according to Claim 15, **characterised in that** the meshing driving surface is formed on the driving means (27), and the meshing driven surface is formed on the assistance part (22).

17. Control stop according to any one of the preceding Claims, **characterised in that** the driving means comprise a worm (27).

18. Control stop according to Claims 16 and 17 taken together, **characterised in that** the meshing driving surface is defined by a screw thread of the worm (27), and the meshing driven surface is defined by a complementary set of peripheral teeth formed on the assistance part (22).

19. Control stop according to Claim 18, **characterised in that** the driving screw thread and the driven teeth are so oriented as to prevent any free rotation of the movable member (16) in a direction opposed to a disengagement direction.

20. Control stop according to Claim 15, **characterised in that** the meshing driving surface is formed on the assistance part (22) and the meshing driven surface is formed on the support part (24).

21. Control stop according to any one of the preceding Claims, **characterised in that** the driving means (27) are driven in rotation by an electrical or hydraulic means.

22. Control stop according to any one of the preceding Claims, **characterised in that** the fixed member (14) defines the leadscrew of the leadscrew and nut drive (12), and the movable member (16) defines the nut of the leadscrew and nut drive.

23. Control stop according to any one of the preceding Claims, **characterised in that** the fixed member (14) and the movable member (16) are formed with complementary screw threads which are oriented in such a way as to prevent any free rotation of the movable member (16) in a direction opposed to a disengagement direction.

## Patentansprüche

1. Ausrücker (10) für eine Kraftfahrzeugkupplung mit einer Schrauben-Mutter-Anordnung (12), umfassend ein ortsfestes erstes Organ (14), das durch Einschrauben mit einem beweglichen zweiten Organ (16) zusammenwirkt, welches dazu bestimmt ist, durch Drehantriebsmittel (27) verstellt zu werden, wobei dieses bewegliche zweite Organ (16) ein Andrückorgan (18) trägt, das dazu bestimmt ist, mit einer Membranfeder (20) zusammenzuwirken, wobei das bewegliche zweite Organ (16) zwei Teile umfasst, die als Unterstützungsteil (22) bzw. als Trägerteil (24) bezeichnet werden, wobei diese Teile im Verhältnis zueinander beweglich in etwa parallel zur Einschraubrichtung des ersten und zweiten Organs gelagert sind, wobei der Ausrücker (10) Unterstützungsmittel (26) für die Verstellung des Andrückorgans (18) zwischen einer Ruhe- und einer Ausrückposition der Membranfeder umfasst, **dadurch gekennzeichnet, dass** diese Unterstützungsmittel (26) dazu bestimmt sind, den Unterstützungsteil (22) des beweglichen Organs (16) kinematisch drehfest mit einem Antriebsorgan zu verbinden, das drehfest mit der Membranfeder (20) verbunden ist oder durch diese Membranfeder (20) gebildet wird.

2. Ausrücker nach Anspruch 1, **dadurch gekennzeichnet, dass** das Andrückorgan (18) ein Wälzlager (28) mit zwei Ringen, einem drehbar gelagerten Ring (28b) und einem drehfest gelagerten Ring (28a), umfasst, wobei der drehbar gelagerte Ring (28b) dazu bestimmt ist, mit der Membranfeder (20) zusammenzuwirken, und wobei der drehfest gelagerte Ring (28a) am Trägerteil (24) des beweglichen Organs (16) angebracht ist, während der Unterstützungsteil (22) des beweglichen Organs (16) dazu bestimmt ist, mit dem drehbar gelagerten Ring (28b) des Wälzlagers über komplementäre Reibungsmittel (30) zusammenzuwirken, die unter der Einwirkung einer Einspannkraft untereinander zusammenwirken.

3. Ausrücker nach Anspruch 2, **dadurch gekennzeichnet, dass** die Einspannkraft von dem durch die Antriebsmittel (27) des beweglichen Organs (16) bereitgestellten Drehmoment abhängig ist.

4. Ausrücker nach Anspruch 2 oder 3, **dadurch gekennzeichnet, dass** Kopplungsmittel (32), die freigebbar sind, wenn sich die Membranfeder (20) im Ruhezustand befindet, kinematisch zwischen dem Unterstützungsteil (22) des beweglichen Organs (16) und dem drehbar gelagerten Ring (28b) eingefügt sind.

5. Ausrücker nach Anspruch 4, **dadurch gekennzeichnet, dass** die freigebbaren Kopplungsmittel als Freilauf dienende Mittel (32) umfassen, die kinematisch zwischen dem Unterstützungsteil (22) des beweglichen Organs (16) und den Reibungsmitteln (30) eingefügt sind.

6. Ausrücker nach Anspruch 4, **dadurch gekennzeichnet, dass** die freigebbaren Kopplungsmittel (32) eine Fliehkraftkupplung umfassen, die kinematisch beispielsweise zwischen dem drehbar gelagerten Ring (28b) des Wälzlagers und den Reibungsmitteln (30) eingefügt sind.

7. Ausrücker nach Anspruch 3 bis 6, **dadurch gekennzeichnet, dass** er Mittel (39) zur Verstärkung der Einspannkraft der Reibungsmittel (30) umfasst.

8. Ausrücker nach Anspruch 7, **dadurch gekennzeichnet, dass** die Mittel (39) zur Verstärkung der Einspannkraft der Reibungsmittel (30) einen Hebel (40) umfassen, der zwischen den Reibungsmitteln (30) und dem Unterstützungsteil (22) des beweglichen Organs (16) eingefügt ist.

9. Ausrücker nach Anspruch 8, **dadurch gekennzeichnet, dass** der zwischen den Reibungsmitteln (30) und dem Unterstützungsteil (22) des beweglichen Organs (16) eingefügte Hebel ein einarmiger Hebel ist.

10. Ausrücker nach Anspruch 9, **dadurch gekennzeichnet, dass** der Hebel (40) aus einer Scheibe besteht, die mit einer als Anlagekante dienenden Innenkante, die in eine am Trägerteil (24) des beweglichen Organs (16) eingearbeitete komplementäre ringförmige Auskehlung (42) eingepasst ist, mit einer mit dem Unterstützungsteil (22) des beweglichen Organs (16) zusammenwirkenden Außenkante für den Angriff der Einspannkraft und mit einem zwischen der Innenkante und der Außenkante befindlichen Zwischenbereich für die Anlage an den Reibungsmitteln (30) versehen ist.

11. Ausrücker nach einem der Ansprüche 2 bis 10, **dadurch gekennzeichnet, dass** die Reibungsmittel (30) Klemmmittel (44) zum Einklemmen eines fest mit dem drehbar gelagerten Ring (28b) verbundenen und als geklemmtes Element bezeichneten ringförmigen Element (46) umfassen, die am Trägerteil (22) des beweglichen Organs (16) angebracht sind, so dass es drehfest mit diesem Teil (22) verbunden ist.

12. Ausrücker nach Anspruch 11, **dadurch gekennzeichnet, dass** die Klemmmittel (44) eine bewegliche Klemmbacke (48a) umfassen, die verschiebbar auf einer ortsfesten Klemmbacke (48b) gelagert ist, wobei Reibungselemente (50) einerseits zwischen dem geklemmten Element (46) und der ortsfesten Klemmbacke (48a) und andererseits zwischen dem geklemmten Element (46) und der beweglichen Klemmbacke (48a) eingefügt sind.

13. Ausrücker nach Anspruch 9 und 12 zusammengenommen, **dadurch gekennzeichnet, dass** der Hebel (40b) aus einer Scheibe besteht, die mit einer Innenkante in Anlage an einem fest mit der ortsfesten Klemmbacke (48a) verbundenen Anschlag, mit einer Außenkante in Anlage am Unterstützungsteil (22) des beweglichen Organs (16) und mit einem zwischen der Innenkante und der Außenkante befindlichen Zwischenbereich in Anlage an der beweglichen Klemmbacke (48a) versehen ist.

14. Ausrücker nach einem der vorangehenden Ansprüche in Kombination mit Anspruch 3, **dadurch gekennzeichnet, dass** die Unterstützungsmittel (26) Mittel zur Verstellung des Unterstützungsteils (22) des beweglichen Organs (16) im Verhältnis zu seinem Trägerteil (24) umfassen, welche die Einspannkraft bereitstellen.

15. Ausrücker nach Anspruch 14, **dadurch gekennzeichnet, dass** die Verstellmittel komplementäre Eingriffsflächen umfassen, die als treibende und getriebene Eingriffsfläche bezeichnet werden und die so ausgerichtet sind, dass sie eine Antriebskomponente für den Unterstützungsteil (22) parallel zur Einschraubrichtung erzeugen.

16. Ausrücker nach Anspruch 15, **dadurch gekennzeichnet, dass** die treibende Eingriffsfläche an den Antriebsmitteln (27) und die getriebene Eingriffsfläche am Unterstützungsteil (22) eingearbeitet ist.

17. Ausrücker nach einem der vorangehenden Ansprüche, **dadurch gekennzeichnet, dass** die Antriebsmittel eine Schnecke (27) umfassen.

18. Ausrücker nach den Ansprüchen 16 und 17 zusammengenommen, **dadurch gekennzeichnet, dass** die treibende Eingriffsfläche durch ein Gewinde der Schnecke (27) und die getriebene Eingriffsfläche durch eine am Unterstützungsteil (22) eingearbeitete komplementäre Umfangszahnung begrenzt ist.

19. Ausrücker nach Anspruch 18, **dadurch gekennzeichnet, dass** das treibende Gewinde und die getriebene Zahnung so ausgerichtet sind, dass jede freie Drehung des beweglichen Organs (16) in einer Richtung entgegen einer Ausrückrichtung ausgeschlossen ist.

20. Ausrücker nach Anspruch 15, **dadurch gekennzeichnet, dass** die treibende Eingriffsfläche am Unterstützungsteil (22) und die getriebene Eingriffsfläche am Trägerteil (24) eingearbeitet ist.

21. Ausrücker nach einem der vorangehenden Ansprüche, **dadurch gekennzeichnet, dass** die Antriebsmittel (27) durch ein elektrisches oder hydraulisches Mittel drehend angetrieben werden.

22. Ausrücker nach einem der vorangehenden Ansprüche, **dadurch gekennzeichnet, dass** das ortsfeste Organ (14) die Schraube der Schrauben-Mutter-Anordnung und das bewegliche Organ (16) die Mutter der Schrauben-Mutter-Anordnung bildet.

23. Ausrücker nach einem der vorangehenden Ansprüche, **dadurch gekennzeichnet, dass** das ortsfeste Organ (14) und das bewegliche Organ (16) mit komplementären Gewinden versehen sind, die so ausgerichtet sind, dass jede freie Drehung des beweglichen Organs (16) in einer Richtung entgegen einer Ausrückrichtung ausgeschlossen ist.
